Europäisches Patentamt

European Patent Office

Office européen des brevets

(19)

(11) Veröffentlichungsnummer: **0 001 262**
**B1**

(12) **EUROPÄISCHE PATENTSCHRIFT**

(45) Veröffentlichungstag der Patentschrift: **15.09.82**

(21) Anmeldenummer: **78100891.7**

(22) Anmeldetag: **14.09.78**

(51) Int. Cl.³: **B 23 Q 1/08**, B 23 Q 37/00,
B 27 C 9/00

(54) **Spindeleinheit für Metall- und Holzbearbeitungsmaschinen.**

(30) Priorität: **20.09.77 DE 7729137 U**

(43) Veröffentlichungstag der Anmeldung:
**04.04.79 Patentblatt 79/7**

(45) Bekanntmachung des Hinweises auf die Patenterteilung:
**15.09.82 Patentblatt 82/37**

(84) Benannte Vertragsstaaten:
**FR GB SE**

(56) Entgegenhaltungen:
**CH - A - 237 820**
**DE - B - 1 182 507**
**DE - C - 1 033 992**
**DE - U - 7 729 137**
**FR - A - 511 156**
**US - A - 3 103 058**
**US - A - 3 554 062**

(73) Patentinhaber: **SKF KUGELLAGERFABRIKEN GMBH**
**Ernst-Sachs-Strasse 2-8 Postfach 1440**
**D-8720 Schweinfurt (DE)**

(72) Erfinder: **Betsch, Harald**
**Sinnweg 2**
**D-8720 Schweinfurt (DE)**
Erfinder: **Giebner, Erich**
**Eibenstrasse 40**
**D-8721 Dittelbrunn (DE)**
Erfinder: **Reinhardt, Peter**
**Flugplatzstrasse 6**
**D-8721 Geldersheim (DE)**

(74) Vertreter: **Glanz, Werner, Dipl.-Ing.**
**Ernst-Sachs-Strasse 2-8**
**D-8720 Schweinfurt (DE)**

Courier Press, Leamington Spa, England.

Spindeleinheit für Metall- und Holzbearbeitungsmaschinen

Die vorliegende Erfindung betrifft eine Spindeleinheit für Metall- und Holzbearbeitungsmaschinen mit in einem Gehäuse über Wälz- oder Gleitlager gelagerter Spindel und mit einer am arbeitsseitigen Ende der Spindel befestigten auswechselbaren Werkzeugaufnahme, wobei zur Übertragung des Drehmomentes zwischen den Stirnflächen der Spindel und der Werkzeugaufnahme Mitnehmerkeile angeordnet sind.

Es sind Spindeleinheiten für Werkzeugmaschinen mit in einem Gehäuse über Wälz- oder Gleitlager gelagerter Spindel bekannt. Das Gehäuse ist dabei als Aufsetz- oder Flanschgehäuse zur Befestigung in den verschiedensten Maschinentypen ausgebildet. Im allgemeinen sind bei diesen Ausführungen die Spindeln auf den bestimmten Anwendungszweck (drehen, fräsen, schleifen, bohren, sägen oder dgl.) zugeschnitten, d.h. die Spindel sind einstückig mit den entsprechenden Spindelköpfen versehen. Dies erschwert einerseits eine rationelle und kostengünstige Fertigung und andererseits auch die· Lagerhaltung sowohl beim Hersteller als auch beim Verbraucher.

Es sind weiterhin auch bereits Spindeleinheiten mit auswechselbaren Werkzeugaufnahmen bekannt. Bei der in DE—B—1 182 507 beschriebenen Spannrichtung für eine Werkzeugaufnahme wird das mit Gewinde und mit zur Spindel komplementären Zentrierteil versehene Werkzeug mittels einer ein Spindelteil hintergreifenden Spannhülse gespannt, wobei als Zentrierteil nur eine kurze zylindrische Zentrierung mit ebener Stirnanlagefläche und als Mitnahme in der Stirnanlagefläche der Spindel angeordnete Keile vorgesehen sind. Bei dieser bekannten Ausführing weist sowohl das zu spannende Werkzeug als auch die als Überwurfmutter ausgebildete Spannhülse, die zum Teil sogar zweiteilig ausgebildet ist, je ein Gewinde auf, über das die Befestigung erfolgt. Ein solches Gewinde kann leicht beschädigt werden, so daß eine einwandfreie Befestigung nicht gewährleistet ist. Weiterhin sind hier eine Fülle von Einzelteilen und auch Maßnahmen zur Befestigung des Werkzeuges erforderlich. Auch baut diese bekannte Anordnung wegen der als Spannhülse verwendeten Überwurfmutter in radialer Höhe sehr groß, wobei die einwandfreie Abdichtung des Lagerraumes nicht ohne Schwierigkeiten zu bewältigen ist.

Durch die DE—C—1 033 992 ist eine Ausführung bekannt, bei der der Spanndorn in der Bohrung eines zwischen Werkzeug und Spindelkopf eingesetzten Aufnahmekörpers geführt ist der seinerseits mit seiner Stirnfläche auf der Stirnfläche des Spindelkopfes aufliegt und diesen mit seinen konzentrischen zylindrischen Einpaß genau passend umgreift. Hier sind zur Zentrierung des Spanndornes zusätzliche Mittel erforderlich.

Aufgabe der vorliegenden Erfindung ist es, eine Spindeleinheit zu schaffen, die einfach im Aufbau und universell anwendbar ist, d.h. einfach dem jeweiligen bestimmten Anwendungsfall angepaßt werden kann.

Gelöst wird diese Aufgabe nach der vorliegenden Erfindung dadurch, daß die auswechselbare Werkzeugaufnahme mittels in axiale Bohrungen eingreifenden Schrauben am arbeitsseitigen Ende der Spindel befestigt und mit einem axial verlaufenden ringförmigen Vorspring versehen ist, der über die Mantelfläche der Spindel im Bereich des arbeitsseitigen Endes übergreift. Auf diese Weise wird neben einer leichten Auswechselbarkeit der Werkzeugaufnahme auch eine einwandfreie Zentrierung der Werkzeugaufnahme gegenüber der Spindel und damit ein genauer Rundlauf des Werkzeuges erzielt. Weiterhin kommt die Stirnfläche des Vorsprunges der Werkzeugaufnahme an der ihr zugewandten Stirnfläche des benachbarten Wälzlagers zur Anlage, so daß die Werkzeugaufnahme gleichzeitig zur axialen Fixierung der Lager herangezogen werden kann, wodurch zusätzliche Vorkehrungen oder Teile erspart werden.

Um eine wirksame Abdichtung des Spindelgehäuses gegenüber dem Eintritt von Bearbeitungsmittel bzw.

Schmutz zu erreichen, wird nach einem weiteren Merkmal der Erfindung die Werkzeugaufnahme mit einem weiteren axial verlaufenden ringförmigen Vorsprung und der gegenüberliegende Abschlußdeckel des Gehäuses mit einer axial verlaufenden Ringnut versehen, in die der Vorsprung an der Werkzeugaufnahme eingreift. Somit bilden die Werkzeugaufnahme und der Abschlußdeckel der Spindel zusammen ein wirksames Labyrinth.

Mit dieser erfindungsgemäßen Ausbildung ist es möglich, die Spindeleinheit im Grundaufbau für alle Anwendungsgebiete gleich zu gestalten und auf Vorrat zu halten. Es ist lediglich erforderlich, die dem gewünschten Anwendungsfall entsprechende Werkzeugaufnahme am arbeitsseitigen Spindelende zu befestigen. Dies kann auch jederzeit geschehen, wenn die Spindeleinheit für eine andere Bearbeitungsoperation umgestellt werden soll.

Im folgenden soll die Erfindung anhand der in den beigefügten Zeichnungen dargestellten Ausführungsbeispiele näher erläutert werden.

Es zeigt:

Fig. 1 eine Seitenansicht (teilweise geschnitten) der Spindeleinheit,

Fig. 2 eine stirnseitige Draufsicht auf die Spindeleinheit nach Fig. 1 und

Fig. 3 bis Figur 6 verschiedene Werkzeugaufnahmen für verschiedene Anwendungsfälle.

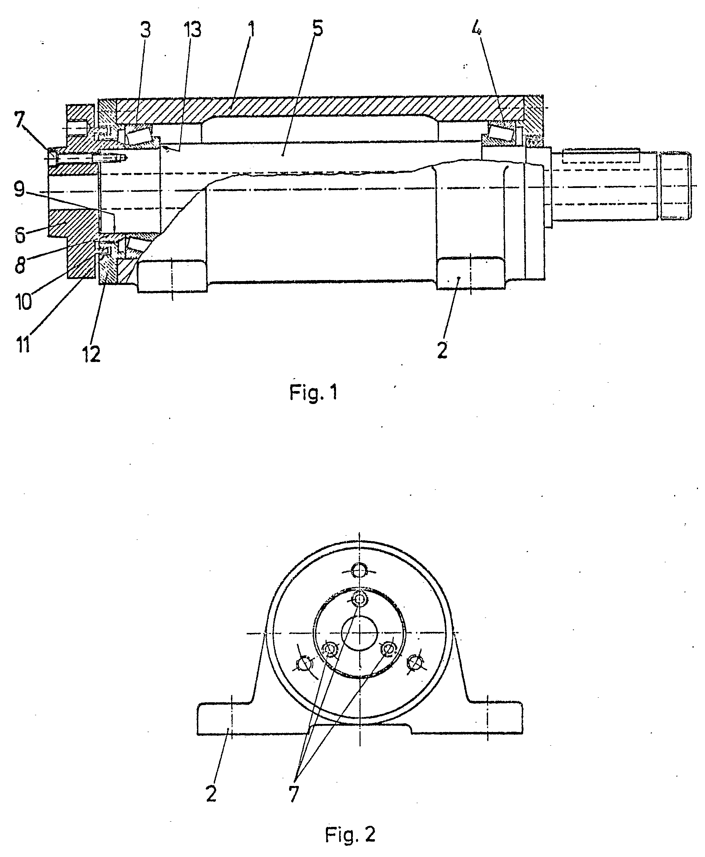

Die Spindeleinheit nach Figur 1 besteht aus dem Gehäuse 1, das hier als Aufsetzgehäuse mit Befestigungsfüßen 2 ausgebildet ist, der in den Wälzlagern 3 und 4 gelagerten Spindel 5 sowie der am arbeitsseitigen Ende an der Spindel 5 befestigten Werkzeugaufnahme 6. Die Werkzeugaufnahme 6 ist durch mehrere am Umfang verteilte Schrauben 7 an der Stirnseite der Spindel 5 befestigt. Ein axial verlaufender ringförmiger Vorsprung 8 an der Werkzeugaufnahme 6 übergreift die Mantelfläche 9 der Spindel 5 und zentriert somit die Werkzeugaufnahme gegenüber der Spindel. Durch (nicht näher dargestellte) Mitnehmer zwischen den Stirnflächen der Spindel 5 und der Werkzeugaufnahme 6 wird eine einwandfreie Drehmomentübertragung gewährleistet.

Die Werkzeugaufnahme weist weiterhin einem ebenfalls axial verlaufenden ringförmigen Vorspring 10 auf, der in eine entsprechende axial verlaufende Ringnut 11 im Abschlußdeckel 12 des Gehäuses 1 eingreift. Wie aus Figur 1 zu ersehen ist, dient die Werkzeugaufnahme 6 gleichzeitig zur axialen Befestigung des Innenringes des Wälzlagers 3, der gegen eine Schulter 13 der Spindel 5 anliegt.

Auf dem antriebsseitigen Ende der Spindel 5 ist in bekannter Weise eine mit einer Keilnut und einem Gewinde versehene Fläche zum Aufsetzen eines Antriebsrades oder dgl. vorgesehen.

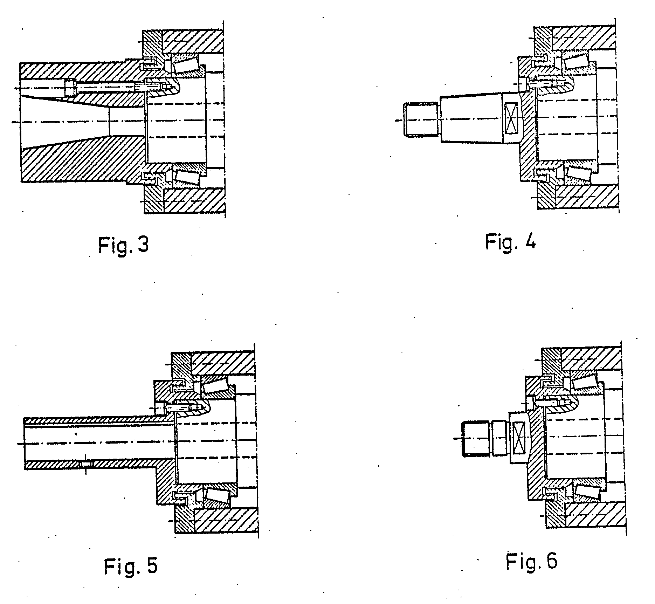

Während beim Ausführungsbeispiel nach Figur 1 ein Drehspindelkopf als Werkzeugaufnahme vorgesehen ist, handelt es sich beim Gegenstand der Figur 3 um einem Frässpindelkopf, beim Gegenstand der Figur 4 um ein kegeliges Wellenende, bei Figur 5 um einen Bohrspindelkopf und bei Figur 6 um einen Spindelkopf für ein Sägeblatt. Diese Werkzeugaufnahmen sind abgesehen von dem eigentlichen Werkzeugaufnahmeteil in änlicher Weise ausgebildet wie die Werkzeugaufnahme nach Figur 1. Es ist selbstverständlich möglich, über die genannten Beispiele hinaus weitere Ausführungen der Werkzeugaufnahme vorzusehen.

**Patentansprüche**

1. Spindeleinheit für Metall- und Holzbearbeitungsmaschinen mit in einem Gehäuse (1) über Wälz- oder Gleitlager (3, 4) gelagerter Spindel (5) und mit einer an arbeitsseitigen Ende der Spindel (5) befestigten auswechselbaren Werkzeugaufnahme (6), wobei zur Übertragung des Drehmomentes zwischen den Stirnflächen der Spindel (5) und der Werkzeugaufnahme (6) Mitnehmerkeile angeordnet sind, dadurch gekennzeichnet, daß die auswechselbare Werkzeugaufnahme (6) mittels in axiale Bohrungen eingreifenden Schrauben (7) am arbeitsseitigen Ende der Spindel (5) befestigt und mit einem axial verlaufenden ringförmigen Vorsprung (8) versehen ist, der über die Mantelfläche (9) der Spindel (5) im Bereich des arbeitsseitigen Endes übergreift.

2. Spindeleinheit nach Anspruch 1, dadurch gekennzeichnet, daß die Werkzeugaufnahme (6) mit einem axial verlaufenden ringförmigen Vorsprung (10) und der Abschlußdeckel (12) des Gehäuses (1) am arbeitsseitigen Ende mit einer entsprechenden axial verlaufenden Ringnut (11) versehen ist, in die der Vorsprung (10) der Werkzeugaufnahme (6) eingreift.

**Claims**

1. Machine tool spindle unit for metalworking and woodworking machines incorporating a spindle (5) equipped with rolling bearings or plain bearings (3, 4) and accommodated in a housing (1), where an interchangeable tool carrier (6) is attached to the work end of the spindle (5) and where drivers are arranged between the faces of the spindle (5) and the tool carrier (6) for torque transmission, characterized in that the interchangeable tool carrier (6) is attached to the work end of the spindle (5) by means of screws (7) engaging in axial holes and in that the tool carrier (6) is provided with an annular projection (8) in axial direction overlapping the outside diameter (9) of the work end of the spindle (5).

2. Machine tool spindle unit as claimed in Claim 1, characterized in that the tool carrier (6) is provided with an annular projection (10) in axial direction and in that the end cover (12) of the housing (1) is provided at the work end with a corresponding annular groove (11) in axial direction in which the projection (10) of the tool carrier (6) engages.

**Revendications**

1. Ensemble-broche pour machines à travailler les métaux et le bois ayant une broche (5) montée sur des roulements ou des paliers lisses (3, 4) et logée dans un boîtier (1), le bout opérateur de la broche (5) étant pourvu d'un porte-outil (6) échangeable, où des tocs d'entraînement disposés entre les faces de la broche (5) et du porte-outil (6) servent à transmettre le couple, caractérisé par le fait que le porte-outil (6) échangeable est fixé au bout opérateur de la broche (5) par des vis (7) recueillies dans des trous axiaux, le porte-outil étant pourvu d'une saillie annulaire (8) s'étendant axialement qui recouvre la périphérie (9) de la broche (5) à son bout opérateur.

2. Ensemble-broche selon la revendication 1, caractérisé par le fait que le porte-outil (6) est pourvu d'une saillie annulaire (10) s'étendant axialement et que le couvercle de fermeture (12) du boîter (1) a du côté opérateur une rainure circulaire (11) correspondante s'étendant axialement qui recueille la saillie (10) du porte-outil (6).

Fig. 1

Fig. 2

Fig. 3

Fig. 4

Fig. 5

Fig. 6